# EUROPEAN PATENT SPECIFICATION

(11) **EP 3 670 142 B1**
(45) Date of publication and mention of the grant of the patent: **21.12.2022**
(21) Application number: 19217284.9
(22) Date of filing: 18.12.2019
(51) Int. Cl.: B29C 48/49, B29C 48/375, B29C 48/305, B29D 30/52, B29C 48/30, B29C 48/16, B29C 48/21, B29D 30/08, B29D 30/16, B29D 30/62, B29C 48/07

(54) **DUAL COMPOUND EXTRUDER APPARATUS WITH ROTATABLE HEAD AND METHODS FOR FORMING A COEXTRUDED STRIP**
DOPPELVERBUNDEXTRUDERVORRICHTUNG MIT DREHBAREM KOPF UND VERFAHREN ZUR HERSTELLUNG EINES COEXTRUDIERTEN STREIFENS
APPAREIL D'EXTRUDEUSE À DOUBLE COMPOSÉ À TÊTE ROTATIVE ET PROCÉDÉS DE FORMATION D'UNE BANDE COEXTRUDÉE

(30) Priority: 19.12.2018 US 201862781742 P; 19.12.2018 US 201862781747 P; 09.10.2019 US 201916597125; 09.10.2019 US 201916597206
(43) Date of publication of application: 24.06.2020
(73) Proprietor: The Goodyear Tire & Rubber Company, Akron, OH 44316 (US)
(72) Inventor: DYRLUND, Christopher David, Canton OH 44705 (US); WOOD, Jacob Steven, Tallmadge OH 44278 (US)
(74) Representative: Kutsch, Bernd

(56) References cited:
- EP-A1- 2 535 176
- EP-A1- 2 995 439
- EP-A1- 3 112 143
- EP-A1- 3 260 285
- CN-A- 106 427 000
- JP-A- 2002 103 413
- US-A1- 2007 031 529

## Description

### Field of the Invention

The invention relates in general to tire manufacturing and, more particularly, to an apparatus for forming tire components and a tire, and to methods for forming a coextruded strip for use as a tire component.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available, due to the extensive costs associated with each compound. Each compound typically requires the use of a banbury mixer, which involves expensive capital expenditures. Furthermore, banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus, it is desired to have an improved method and apparatus to produce a coextruded continuous strip of two compounds from a single application head. The inventors have discovered that a coextruded strip of two compounds, wherein the volume ratio of the compounds may be varied, results in a huge manufacturing advantage due to the complexity of tire designs that may be made in an efficient manner. The coextruded strip allows the manufacturing of complex tire component geometries to achieve specific improvements in performance and durability characteristics. Furthermore, a rotatable applicator head facilitates the formation of complex tire and/or tire component designs.

EP 3 112 143 A1 describes an apparatus and a method in accordance with the preamble of claims 1 and 11 respectively. JP 2002 103 413 A also describes an apparatus in accordance with the preamble of claim 1.

US 2007/031529 A1, EP 3 260 285 A1, CN 106 427 000 A and EP 2 535 176 A1 disclose an extruder apparatus having a rotatable head.

EP 2 995 439 A1 shows an apparatus for producing laminated fabric ply strips comprising a cross-head die assembly for use with an extruder.

### Summary of the Invention

The invention relates to an apparatus in accordance with claim 1 and to a method in accordance with claims 11 or 14 respectively.

Dependent claims refer to preferred embodiments of the invention.

In a preferred embodiment of the invention, an apparatus for forming a coextruded strip of a first compound A and a second compound B is provided. The apparatus comprises a first extruder in fluid communication with a first gear pump for processing a first compound A; and a second extruder in fluid communication with a second gear pump for processing a second compound B. The outlet from the first gear pump is in fluid communication with a first channel of a coextrusion nozzle, and the outlet from the second gear pump is in fluid communication with a second channel of the coextrusion nozzle, wherein the first and second compounds are joined under pressure in a relatively high pressure, relatively low volume coextrusion zone at the nozzle outlet. The nozzle is mounted on a rotatable head that is rotatable about a Z axis.

In a preferred aspect of the invention, the coextrusion nozzle has an insert which divides the nozzle into a first and second passageway, wherein the first and second passageways are separate at the nozzle inlet.

In a preferred aspect of the invention, the coextrusion nozzle has an insert which divides the nozzle into a first and second passageway, wherein the first and second passageways join together downstream of a distal end of the insert.

In a preferred aspect of the invention, the coextrusion zone is located between the distal end of the insert and the nozzle die.

In a preferred aspect of the invention, the insert has a distal end for positioning adjacent a die outlet of the coextrusion nozzle.

In a preferred aspect of the invention, the distal end has an elongated flat portion.

In a preferred aspect of the invention, the ratio of the volume of compound A to the volume of compound B is varied by changing the ratio of the speed of the first gear pump to the second gear pump.

In a preferred aspect of the invention, the ratio of the first gear pump to the second gear pump may be varied during operation of the system.

In a preferred aspect of the invention, the insert is removable.

In a preferred aspect of the invention, the insert has a rectangular cross-sectional shape.

In a preferred aspect of the invention, the strip is applied in a continuous manner to a tire building machine to build a tire component.

In a preferred aspect of the invention, a first and second flow passageways from the output from the first and second gear pump are routed into the rotatable head, wherein the first and second flow passageways each have a portion that is aligned with the vertical direction prior to entering the rotatable head.

In a preferred aspect of the invention, the first and second passageways decrease in area in the rotatable head.

In a preferred aspect of the invention, the first and second passageways are angled at an angle with respect to the horizontal axis, wherein the angle is in the range of from 30 to 80 degrees.

In a preferred aspect of the invention, the first and second passageways are joined together immediately upstream of the die outlet of the coextrusion nozzle.

In a preferred aspect of the invention, the first gear pump to the second gear pump may be varied instantaneously.

In one aspect of the invention, a method for forming a coextruded strip of a first compound and a second compound is provided. The method comprises the steps of extruding a first compound through a first extruder and a first gear pump and into a first passageway of a coextrusion nozzle while extruding a second compound through a second extruder and a second gear pump and into a second passageway of the coextrusion nozzle; and forming a continuous coextruded dual compound strip.

In a preferred aspect of the invention, the continuous coextruded dual compound strip is applied to a tire building drum.

The coextrusion nozzle is mounted upon a rotatable head and/or the coextrusion nozzle is rotated while applying to the tire building drum.

In a preferred aspect of the invention, the strip is applied in a continuous manner to build a tire component.

In another aspect of the invention, a method for forming a coextruded strip of a first compound A and a second compound B is provided. The method comprises the steps of: extruding a first compound A through a first extruder and a first gear pump and into a first passageway of a coextrusion nozzle; and extruding a second compound B through a second extruder and a second gear pump and into a second passageway of the coextrusion nozzle. The coextrusion nozzle is mounted upon a rotatable head. The first and second passageways are joined together immediately upstream of the die outlet of the coextrusion nozzle. In this way, a coextruded strip is formed which is then applied to a tire building drum while rotating the coextrusion nozzle.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

### Brief Description of the Drawings

The invention will be described by way of example and with reference to the accompanying drawings in which:
FIG. 1 is a perspective view of a dual compound extruder apparatus of the present invention;
FIG. 2 is a close-up perspective view of a dual compound extruder apparatus of the present invention;

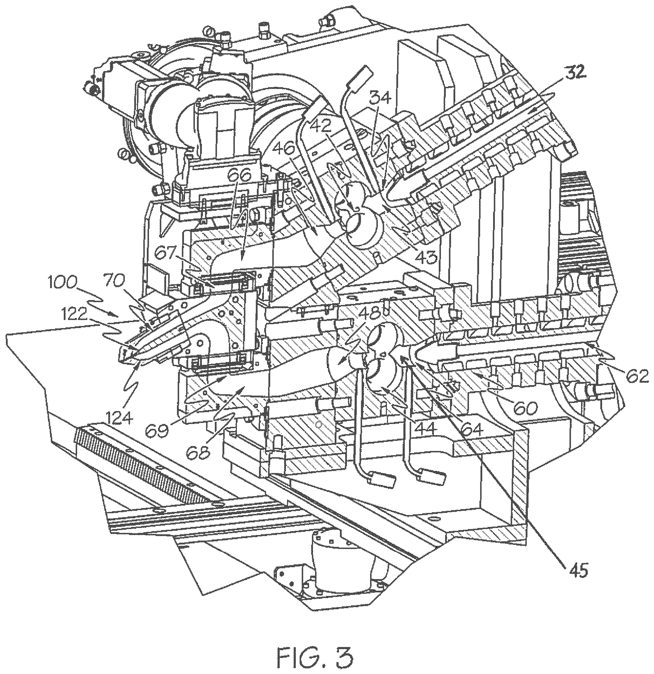

FIG. 3 is a cross-sectional view of the dual compound extruder apparatus of FIG. 2;
FIG. 4 is a perspective cutaway view of a coextrusion nozzle of the present invention;
FIG. 5 is a side cross-sectional view of the coextrusion nozzle of FIG. 4;
FIG. 6A is a cross-sectional view of a coextruded strip of 10% of compound A and 80% of compound B, while FIG. 6B is a coextruded strip of 50% compound A, and 50% compound B;

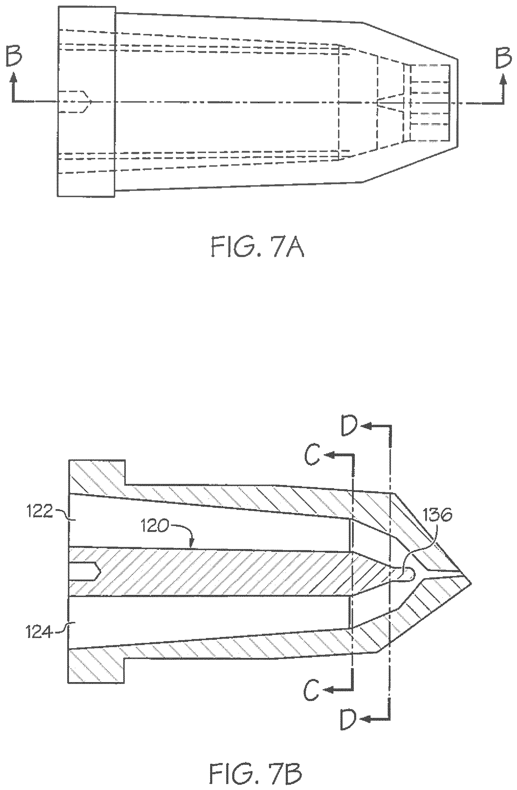

FIG. 7A is a top view of the coextrusion nozzle of FIG. 4;
FIG. 7B is a cross-sectional view in the direction B-B of FIG. 7A;

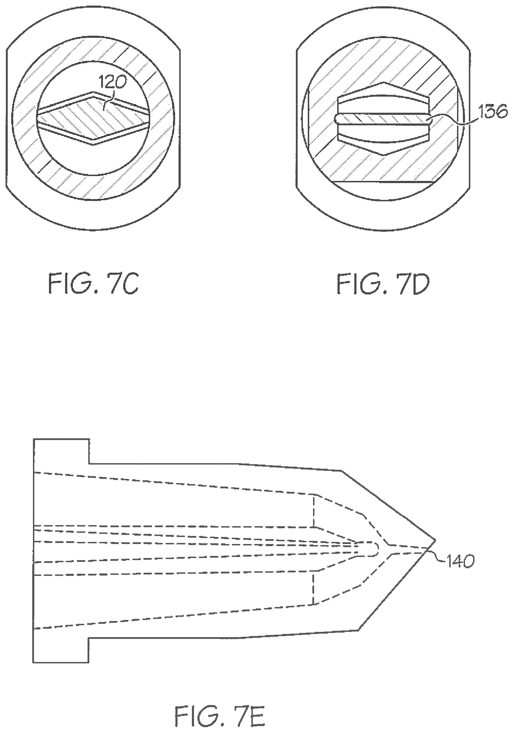

FIG. 7C is a cross-sectional view in the direction C-C of FIG. 7B;
FIG. 7D is a cross-sectional view in the direction D-D of FIG. 7B;
FIG. 7E is a cross-sectional side view of the coextrusion nozzle of FIG. 4;

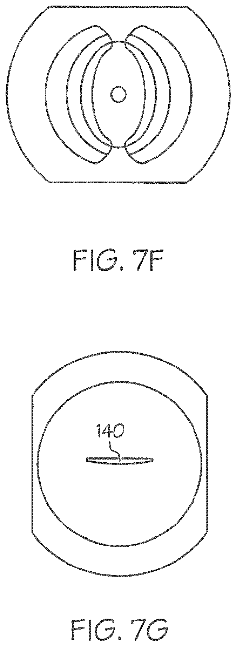

FIG. 7F is an end view of FIG. 7A; and
FIG. 7G is a front view of the coextrusion nozzle of FIG. 7A.

### Detailed Description of Example Embodiments of the Invention

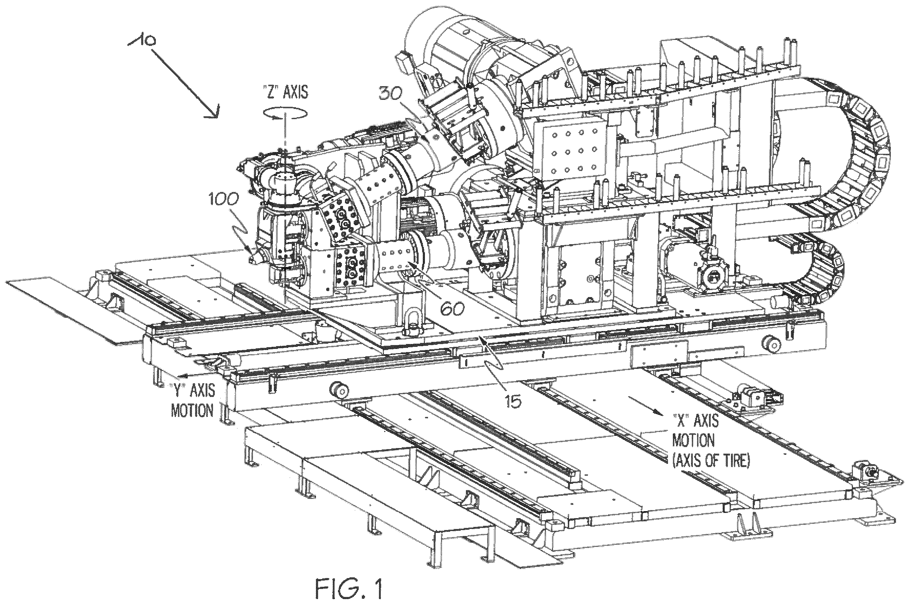

FIG. 1 illustrates a first embodiment of a dual compound extruder apparatus 10 suitable for use for making rubber compositions for tires or tire components such as the tread. The dual compound extruder apparatus 10 is not limited to tire applications and may be used for example, to make other rubber components not related to tires such as conveyors, hoses, belts, etc. The dual compound extruder apparatus 10 is particularly suited for making a tread or small tire components having a varying composition, such as inserts, apexes and treads (including those for retreaded tires). The dual compound extruder apparatus 10 may extrude a continuous coextruded strip of two compounds directly onto a tire building drum, or a tire carcass or a component building apparatus.

The dual compound extruder apparatus 10 is mounted upon a support frame 15. A translatable support bar is mounted to the upper end of the support frame. Preferably, the dual compound extruder apparatus 10 is mounted upon a translatable support bar, that can translate fore and aft in relation to a tire building machine. As shown in FIG. 1, the dual compound extruder apparatus 10 includes a support frame 15 (parts of which have been removed for clarity). The support frame 15 may further include support rails for translating the entire applicator apparatus in the X, Y and Z direction (not shown).

As shown in FIG. 1, the dual compound extruder apparatus 10 includes a first extruder 30 and a second extruder 60, preferably arranged side by side as shown. The first extruder 30 has an inlet 32 for receiving a first rubber composition A as described in more detail, below. The first extruder 30 is driven by a motor such as an electrical motor. The second extruder 60 has an inlet 62 for receiving a second rubber composition B as described in more detail, below. The second extruder 60 is driven by a motor such as an electrical motor. The first or second extruder 30, 60 may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. Preferably, the extruder has a length to diameter ratio (L/D) of 5 or in a range of from 4 to 6, but it may also range from 3 to 20. A pin type of extruder is preferred.

The first extruder inlet 32 receives a first compound A, examples of which are described in more detail, below. The first extruder 30 functions to warm up a first compound A to the temperature in the range of from 80°C to 150°C, preferably 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a rotatable housing for facilitating flow into a coextrusion nozzle 100. The first gear pump 42 functions as a metering device and a pump and may have gears such as planetary gears, bevel gears or other gears.

The second extruder inlet 62 receives a second compound B, examples of which are described in more detail, below. The second extruder 60 functions to warm up the second compound B to the temperature in the range of from 80°C to 150°C, preferably 90°C to 120°C, and to masticate the rubber composition as needed. The output end 64 of the second extruder 60 is connected to an inlet end 45 of a second gear pump 44. Compound B is thus extruded by the second extruder 60 and then pumped by the second gear pump 44, which functions as a metering device and a pump and may have gears such as planetary gears, bevel gears or other gears.

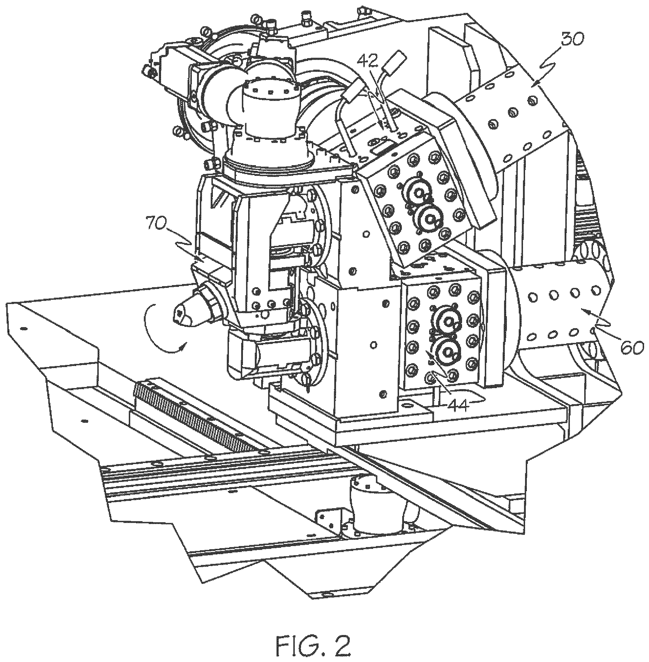

The first and second gear pumps 42, 44 are preferably housed in a single housing or placed in close proximity to each other so that the outlet channels 46, 48 of the first and second gear pumps 42, 44 are also in close proximity, as shown in FIG. 2. The outlet channels 46, 48 are fed into a first and second transition channel 66, 68 which have a horizontal portion followed by a vertical portion 67, 69 prior to entering a rotatable applicator head 70.

### Rotatable Applicator Head

The rotatable applicator head 70 is rotatable about the Z-axis, allowing the nozzle 100 to pivot or rotate. The compound A and compound B flow streams 67, 69 enter the rotatable applicator head 70 in a direction parallel with the Z-axis. The A and B flow streams 67, 69 are decreased in area and angled downwardly prior to entering coextrusion nozzle 100.

The rotatable applicator head can rotate in the range of 100 degrees, or more typically +/- 95 degrees from the center position. Because the rubber material changes direction prior to entering the rotatable applicator head, the flow remains unaffected by the rotation of the applicator head. Since rubber or elastomers have memory, changing direction of the rubber material prior to rotation prevents the material from curling or otherwise having an undesirable non-uniform flow.

### Nozzle Assembly

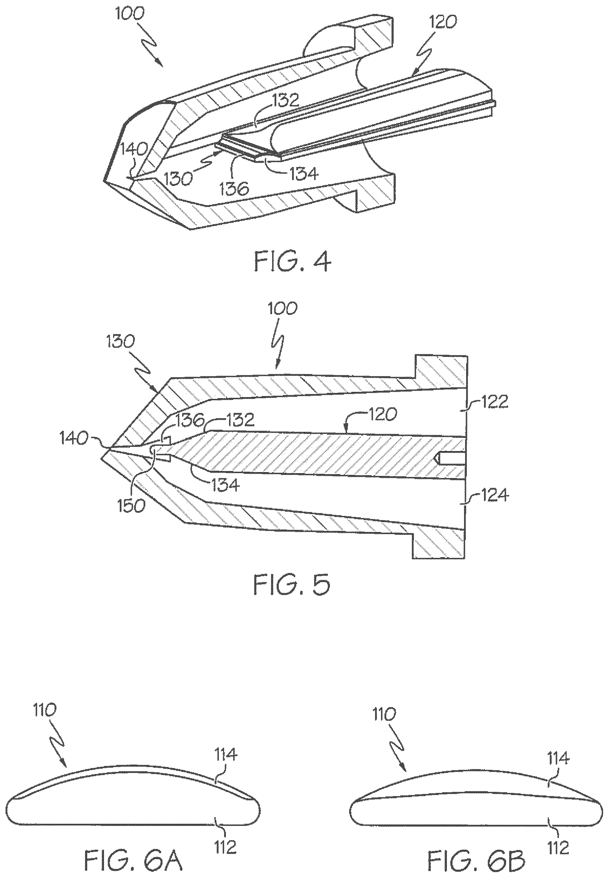

FIGS. 4-5 illustrate a coextrusion nozzle 100 suitable for use with the dual compound extruder apparatus 10 of the present invention. The coextrusion nozzle 100 is useful for forming a coextruded or dual compound continuous strip as shown in FIG. 6. The coextrusion nozzle 100 has a removable insert 120 that functions to divide the nozzle into a first and second flow passageway 122, 124. The removable insert 120 is preferably rectangular in cross-sectional shape. The removable insert 120 has a distal end 130 with tapered ends 132, 134 forming a nose 136. The nose 136 is positioned adjacent the nozzle die exit 140 and spaced a few millimeters such as 2 to 6 mm from the die exit 140. The region between the nose 136 and the die exit 140 is a relatively low volume coextrusion zone 150 that is high pressure. In the low volume coextrusion zone 150, compound A flowstream 122 merges with compound B flowstream 124.

The dual compound extruder apparatus 10 with the coextrusion nozzle 100 produces a coextruded strip 110 having a first layer 112 of a first compound A, and a second layer 114 of a second compound B. The first layer 112 and the second layer 114 are not mixed together and are joined together at an interface in a coextrusion zone of the nozzle. The coextrusion zone is located upstream of the nozzle die, where the compound A flow stream joins with the compound B flow stream. FIG. 6A illustrates a coextruded strip of 10% of compound A, and 90% compound B. FIG. 6B illustrates a second example of a coextruded strip of 50% of compound A and 50% of compound B.

The dual compound extruder apparatus 10 can thus be used to vary the volume ratio of compound A to compound B by varying the ratio of the speed of gear pump of compound A to the speed of gear pump of compound B. The dual compound extruder apparatus 10 can adjust the speed ratios on the fly, and due to the small residence time of the coextrusion nozzle, the apparatus has a fast response to a change in the compound ratios. This is due to the low volume of the coextrusion zone. The dual compound extruder apparatus 10 with the coextrusion nozzle may be used to coextrude a dual compound strip in a continuous manner onto a tire building drum. The ratio of compound A to compound B may be varied by changing the speed ratio of the gear pumps.

The width of the rubber strip output from the nozzle orifice is typically 15 mm in width, but may vary in the range of from 5 mm to 30 mm.

The nozzle 100 may be optionally heated to a temperature in the range of from 0 to 110 degrees Celsius, preferably in the range of from 0 to 93.3 degrees Celsius, using external or internal heaters (not shown).

As shown in FIG. 1, the nozzle 100 is oriented with respect to the tire building drum or core (not shown) or other application surface typically at an angle α in the range of 0 to 90 degrees, more typically in the range of from 35 to 90 degrees. It is preferred that the rubber output from the nozzle 100 is oriented 90 degrees or about 90 degrees relative to the application surface, although α may range from 35 to 90 degrees.

The nozzle is oriented at an angle with respect to a tire building surface or core. The nozzle assembly is capable of translating in two directions in discrete index positions in order to accurately apply the rubber to the building surface. The support surface can be a toroid shaped core or a cylindrical shaped tire building drum, or any other desired shape. The primary advantage of applying the strip to a toroidally shaped surface is the finished part is accurately positioned in a green uncured state at the proper orientation to be molded without requiring any change in orientation from the condition in which the strip was initially formed.

The extrudate exits the nozzle in a strip form, having the desired shape of the exit orifice of the nozzle. If a drum or toroid is used as an applicator surface, as the drum or core rotates, a continuous annular strip may be formed. The nozzle can be indexed axially so to form the desired shape of the component. The nozzle can be controlled by a control system wherein the movement of the nozzle so that the multiple layers of strip dictates the shape of the desired tire component.

The profile of each formed component can be varied in a fashion such that the cross-sectional thickness is very thin as in the tip of an apex or thick near the bead core. Also, the entire profile can be thin as in a liner component.

For a thin component, the die gauge could range from 0.8 mm to 3 mm. The strip cross-sectional shape could be rectangular, square, round or as desired.

The nozzle can articulate moving in numerous directions the numerous degrees of freedom enabling the nozzle/tongue assembly to form flat, convex or concave curvatures as the material is spread. In addition, the numerous degrees of freedom allow the components such as a sidewall to be built. What is important to note is some or all of these tire components can be formed using this technique of the present invention. The tire manufacturer simply can choose which components can be most efficiently produced using this technique.

## Claims

1. An apparatus for forming a coextruded strip (110) of a first compound (A) and a second compound (B), the apparatus (10) comprising:
a first extruder (30) in fluid communication with a first gear pump (42) for processing a first compound (A); and
a second extruder (60) in fluid communication with a second gear pump (44) for processing a second compound (B);
wherein the outlet (46) of the first gear pump (42) is in fluid communication with a first channel (122) of a coextrusion nozzle (100), and the outlet (48) of the second gear pump (44) is in fluid communication with a second channel (124) of the coextrusion nozzle (100); and
wherein the apparatus (10) is configured such that the first and second compounds (A, B) are joined under pressure in a coextrusion zone (150) at the coextrusion nozzle outlet or die (140);
**characterized in that** the coextrusion nozzle (100) is mounted on a rotatable head (70).

2. The apparatus of claim 1 wherein the coextrusion nozzle (100) has an insert (120), preferably a removable insert (120), which divides the coextrusion nozzle into said first and second channel (122, 124), wherein the first and second channel (122, 124) are preferably separate at the nozzle inlet and/or wherein the first and second channel (122, 124) preferably join together downstream of a distal end (130) of the insert (120).

3. The apparatus of claim 2 wherein the coextrusion zone (150) is located between the distal end (130) of the insert (120) and the coextrusion nozzle outlet or die (140); and/or wherein the insert (120) has a distal end (130) for positioning adjacent the coextrusion nozzle outlet or die (140).

4. The apparatus of claim 2 or 3 wherein the distal end (130) has an elongated flat portion or nose (136).

5. The apparatus of at least one of the previous claims wherein the apparatus (10) is configured such that the ratio of the volume of first compound (A) to the volume of second compound (B) can be varied by changing the ratio of the speed of the first gear pump (42) to the second gear pump (44).

6. The apparatus of at least one of the previous claims wherein the insert (120) has a rectangular cross-sectional shape.

7. The apparatus of at least one of the previous claims wherein a first and second transition channel (66, 68) from the respective outlet (46, 48) of the first and second gear pump (42, 44) are routed into the rotatable head (70), and, optionally, wherein the first and second transition channel (66, 68) each have a portion (67, 69) that is at least substantially aligned with a vertical direction of the apparatus (10) prior to entering the rotatable head (70).

8. The apparatus of at least one of the previous claims wherein the first and the second channel (122, 124) decrease in area in the rotatable head (70) in flow direction or towards the coextrusion nozzle outlet or die (140).

9. The apparatus of at least one of the previous claims wherein the first and the second channel (122, 124) are angled at an angle with respect to the horizontal axis of the apparatus (10), wherein the angle is in the range of from 30 to 80 degrees, preferably 35 to 60 degrees.

10. The apparatus of at least one of the previous claims wherein the rotatable head (70) is rotatable about the longitudinal axis of the rotatable head (70), or wherein the rotatable head (70) is rotatable about the axis parallel to the longitudinal direction of the insert (120) and through the coextrusion nozzle outlet or die (140).

11. A method for forming a coextruded strip (110) of a first compound (A) and a second compound (B), the method comprising the steps of:
extruding a first compound (A) through a first extruder (30) and a first gear pump (42) and into a first channel (122) of a coextrusion nozzle (100) while extruding a second compound (B) through a second extruder (60) and a second gear pump (44) and into a second channel (124) of the coextrusion nozzle (100); and
forming a continuous coextruded dual compound strip (110);
**characterized in that** the coextrusion nozzle (100) is mounted upon a rotatable head (70) and/or rotated while applying the strip (110) to the tire building drum or tire carcass.

12. The method of claim 11 further comprising the steps of applying, preferably continuously applying, the continuous coextruded dual compound strip (110) to a tire building drum or to a tire carcass.

13. The method of at least one of the claims 11 to 12 wherein the ratio of the first compound (A) to the second compound (B) is varied, preferably instantaneously varied, by changing the ratio of the speed of the first gear pump (42) to the second gear pump (44).

14. A method for forming a coextruded strip (110) of a first compound (A) and a second compound (B), the method comprising the steps of:
providing a coextrusion nozzle (100) mounted upon a rotatable head (70);
extruding a first compound (A) through a first extruder (30) and a first gear pump (42) and into a first channel (122) of the coextrusion nozzle (100);
extruding a second compound (B) through a second extruder (60) and a second gear pump (44) and into a second channel (124) of the coextrusion nozzle (100);
wherein the first and the second channel (122, 124) are joined together upstream, preferably immediately upstream, of a die outlet (140) of the coextrusion nozzle (100); and
forming a coextruded strip (110) and applying the coextruded strip (110) to a tire building drum or a tire carcass while rotating the coextrusion nozzle (100).

## Patentansprüche

1. Einrichtung zum Ausbilden eines koextrudierten Streifens (110) einer ersten Verbindung (A) und einer zweiten Verbindung (B), die Einrichtung (10) umfassend:
einen ersten Extruder (30) in Fluidkommunikation mit einer ersten Zahnradpumpe (42) zum Verarbeiten einer ersten Verbindung (A); und
einen zweiten Extruder (60) in Fluidkommunikation mit einer zweiten Zahnradpumpe (44) zum Verarbeiten einer zweiten Verbindung (B);
wobei der Auslass (46) der ersten Zahnradpumpe (42) in Fluidkommunikation mit einem ersten Kanal (122) einer Koextrusionsdüse (100) steht und der Auslass (48) der zweiten Zahnradpumpe (44) in Fluidkommunikation mit einem zweiten Kanal (124) der Koextrusionsdüse (100) steht; und
wobei die Einrichtung (10) derart konfiguriert ist, dass die ersten und zweiten Verbindungen (A, B) unter Druck in einer Koextrusionszone (150) an dem Koextrusionsdüsenauslass oder -mundstück (140) verbunden werden;
**dadurch gekennzeichnet, dass** die Koextrusionsdüse (100) auf einem drehbaren Kopf (70) montiert ist.

2. Einrichtung nach Anspruch 1, wobei die Koextrusionsdüse (100) einen Einsatz (120), vorzugsweise einen entfernbaren Einsatz (120), aufweist, der die Koextrusionsdüse in den ersten und den zweiten Kanal (122, 124) unterteilt, wobei der erste und der zweite Kanal (122, 124) vorzugsweise an dem Düseneinlass getrennt sind und/oder wobei der erste und der zweite Kanal (122, 124) vorzugsweise stromabwärts eines distalen Endes (130) des Einsatzes (120) miteinander verbunden werden.

3. Einrichtung nach Anspruch 2, wobei die Koextrusionszone (150) zwischen dem distalen Ende (130) des Einsatzes (120) und dem Koextrusionsdüsenauslass oder - mundstück (140) gelegen ist; und/oder wobei der Einsatz (120) ein distales Ende (130) zum Positionieren angrenzend an den Koextrusionsdüsenauslass oder das - mundstück (140) aufweist.

4. Einrichtung nach Anspruch 2 oder 3, wobei das distale Ende (130) einen länglichen flachen Abschnitt oder eine Nase (136) aufweist.

5. Einrichtung nach mindestens einem der vorstehenden Ansprüche, wobei die Einrichtung (10) derart konfiguriert ist, dass das Verhältnis des Volumens der ersten Verbindung (A) zu dem Volumen der zweiten Verbindung (B) durch ein Ändern des Verhältnisses der Geschwindigkeit der ersten Zahnradpumpe (42) zu der zweiten Zahnradpumpe (44) variiert wird.

6. Einrichtung nach mindestens einem der vorstehenden Ansprüche, wobei der Einsatz (120) eine rechteckige Querschnittsform aufweist.

7. Einrichtung nach mindestens einem der vorstehenden Ansprüche, wobei ein erster und ein zweiter Übergangskanal (66, 68) von dem jeweiligen Auslass (46, 48) der ersten und der zweiten Zahnradpumpe (42, 44) in den drehbaren Kopf (70) geleitet werden und optional, wobei der erste und der zweite Übergangskanal (66, 68) jeweils einen Abschnitt (67, 69) aufweisen, der mindestens im Wesentlichen mit einer vertikalen Richtung der Einrichtung (10) ausgerichtet ist, bevor er in den drehbaren Kopf (70) eintritt.

8. Einrichtung nach mindestens einem der vorstehenden Ansprüche, wobei der erste und der zweite Kanal (122, 124) in Fläche in dem drehbaren Kopf (70) in Strömungsrichtung oder zu dem Koextrusionsdüsenauslass oder dem -mundstück (140) hin abnehmen.

9. Einrichtung nach mindestens einem der vorstehenden Ansprüche, wobei der erste und der zweite Kanal (122, 124) in einem Winkel hinsichtlich der Horizontalachse der Einrichtung (10) ausgerichtet sind, wobei der Winkel in dem Bereich von 30 bis 80 Grad liegt, vorzugsweise 35 bis 60 Grad.

10. Einrichtung nach mindestens einem der vorstehenden Ansprüche, wobei der drehbare Kopf (70) um die Längsachse des drehbaren Kopfs (70) drehbar ist, oder wobei der drehbare Kopf (70) um die Achse parallel zu der Längsrichtung des Einsatzes (120) und durch den Koextrusionsdüsenauslass oder das -mundstück (140) drehbar ist.

11. Verfahren zum Ausbilden eines koextrudierten Streifens (110) von einer ersten Verbindung (A) und einer zweiten Verbindung (B), das Verfahren umfassend die Schritte von:
Extrudieren einer ersten Verbindung (A) durch einen ersten Extruder (30) und eine erste Zahnradpumpe (42) und in einen ersten Kanal (122) einer Koextrusionsdüse (100), während eine zweite Verbindung (B) durch einen zweiten Extruder (60) und eine zweite Zahnradpumpe (44) und in einen zweiten Kanal (124) der Koextrusionsdüse (100) extrudiert wird; und
Ausbilden eines kontinuierlichen koextrudierten Zweiverbindungsstreifens (110);
**dadurch gekennzeichnet, dass** die Koextrusionsdüse (100) auf einem drehbaren Kopf (70) montiert ist und/oder gedreht wird während der Streifen (110) an die Reifenaufbautrommel oder Reifenkarkasse angebracht wird.

12. Verfahren nach Anspruch 11, ferner umfassend die Schritte des Anbringens, vorzugsweise kontinuierlichen Anbringens, des kontinuierlichen koextrudierten Zweiverbindungsstreifens (110) an eine Reifenaufbautrommel oder auf eine Reifenkarkasse.

13. Verfahren nach mindestens einem der Ansprüche 11 bis 12, wobei das Verhältnis der ersten Verbindung (A) zu der zweiten Verbindung (B) variiert, vorzugsweise sofort variiert wird, indem das Verhältnis der Geschwindigkeit der ersten Zahnradpumpe (42) zu der zweiten Zahnradpumpe (44) geändert wird.

14. Verfahren zum Ausbilden eines koextrudierten Streifens (110) von einer ersten Verbindung (A) und einer zweiten Verbindung (B), das Verfahren umfassend die Schritte von:
Bereitstellen einer Koextrusionsdüse (100), die auf einem drehbaren Kopf (70) montiert ist;
Extrudieren einer ersten Verbindung (A) durch einen ersten Extruder (30) und eine erste Zahnradpumpe (42) und in einen ersten Kanal (122) der Koextrusionsdüse (100);
Extrudieren der zweiten Verbindung (B) durch einen zweiten Extruder (60) und eine zweite Zahnradpumpe (44) und in einen zweiten Kanal (124) der Koextrusionsdüse (100);
wobei der erste und der zweite Kanal (122, 124) stromaufwärts, vorzugsweise unmittelbar stromaufwärts, eines Mundstückauslasses (140) der Koextrusionsdüse (100) z miteinander verbunden werden; und
Ausbilden eines koextrudierten Streifens (110) und Anbringen des koextrudierten Streifens (110) an eine Reifenbaufautrommel oder eine Reifenkarkasse, während die Koextrusionsdüse (100) gedreht wird.

## Revendications

1. Appareil destiné à la confection d'une bande coextrudée (110) constituée par un premier composé (A) et par un second composé (B), l'appareil (10) comprenant :
une première extrudeuse (30) qui est mise en communication par fluide avec une première pompe à engrenages (42) destinée au traitement d'un premier composé (A) ; et
une seconde extrudeuse (60) qui est mise en communication par fluide avec une seconde pompe à engrenages (44) destinée au traitement d'un second composé (B) ;
dans lequel la sortie (46) de la première pompe à engrenages (42) est mise en communication par fluide avec un premier canal (122) d'une buse de coextrusion (100), et la sortie (48) de la seconde pompe à engrenages (44) est mise en communication par fluide avec un second canal (124) d'une buse de coextrusion (100) ; et
dans lequel l'appareil (10) est configuré d'une manière telle que le premier et le second composé (A, B) sont joints en étant soumis à une pression dans une zone de coextrusion (150) à la filière ou à la sortie de buse de coextrusion (140) ;
**caractérisé en ce que** la buse de coextrusion (100) est montée sur une tête rotative (70).

2. Appareil selon la revendication 1, dans lequel la buse de coextrusion (100) possède un insert (120), de préférence un insert amovible (120) qui divise la buse de coextrusion afin d'obtenir ledit premier et ledit second canal (122, 124) ; dans lequel le premier et le second canal (122,124) sont de préférence séparés à l'entrée de la buse; et/ou dans lequel le premier et le second canal (122, 124) sont joints de préférence l'un à l'autre en aval d'une extrémité distale (130) de l'insert (120).

3. Appareil selon la revendication 2, dans lequel la zone de coextrusion (150) est située entre l'extrémité distale (130) de l'insert (120) et la filière ou la sortie de buse de coextrusion (140) ; et/ou dans lequel l'insert (120) possède une extrémité distale (130) qui doit venir se disposer en position adjacente à la filière ou à la sortie de buse de coextrusion (140).

4. Appareil selon la revendication 2 ou 3, dans lequel l'extrémité distale (130) possède une portion plate allongée ou un nez allongé (136).

5. Appareil selon au moins une des revendications précédentes, dans lequel l'appareil (10) est configuré d'une manière telle que l'on peut faire varier le rapport entre le volume du premier composé (A) et le volume du second composé (B) en modifiant le rapport entre la valeur de la vitesse de la première pompe à engrenages (42) et celle de la vitesse de la seconde pompe à engrenages (44).

6. Appareil selon au moins une des revendications précédentes, dans lequel l'insert (120) possède une configuration de forme rectangulaire en section transversale.

7. Appareil selon au moins une des revendications précédentes, dans lequel un premier et un second canal de transition (66, 68) sont guidés à partir de la sortie respective (46, 48) de la première et de la seconde pompe à engrenages (42, 44) jusque dans la tête rotative (70) ; et, de manière facultative, dans lequel le premier et le second canal de transition (66, 68) possèdent chacun une portion (67,69) qui est mise en alignement au moins de manière substantielle avec une direction verticale de l'appareil (10), avant leur entrée dans la tête rotative (70).

8. Appareil selon au moins une des revendications précédentes, dans lequel la surface du premier et celle du second canal (122, 124) diminuent dans la tête rotative (70) dans la direction de l'écoulement ou dans la direction de la filière ou de la sortie de buse de coextrusion (140).

9. Appareil selon au moins une des revendications précédentes, dans lequel le premier et le second canal (122, 124) forment un angle par rapport à l'axe horizontal de l'appareil (10) ; dans lequel l'angle se situe dans la plage de 30 à 80 degrés, de préférence de 35 à 60 degrés.

10. Appareil selon au moins une des revendications précédentes, dans lequel la tête rotative (70) est capable d'effectuer des rotations autour de l'axe longitudinal de la tête rotative (70) ; ou dans lequel la tête rotative (70) est capable d'effectuer des rotations autour de l'axe qui est parallèle à la direction longitudinale de l'insert (120) et à travers la filière ou la sortie de buse de coextrusion (140).

11. Procédé destiné à la confection d'une bande coextrudée (110) constituée par un premier composé (A) et par un second composé (B), le procédé comprenant les étapes constituées par le fait de :
extruder un premier composé (A) par l'intermédiaire d'une première extrudeuse (30) et d'une première pompe à engrenages (42) et jusque dans un premier canal (122) d'une buse de coextrusion (100) tout en procédant à l'extrusion d'un second composé (B) par l'intermédiaire d'une seconde extrudeuse (60) et d'une seconde pompe à engrenages (44) et jusque dans un second canal (124) de la buse de coextrusion (100) ; et
confectionner une bande coextrudée continue (110) comportant deux composés ;
**caractérisé en ce que** la buse de coextrusion (100) est montée sur une tête rotative (70) et/ou est mise en rotation au fur et à mesure que l'on applique la bande (110) sur le tambour de confection du bandage pneumatique ou sur la carcasse du bandage pneumatique.

12. Procédé selon la revendication 11, qui comprend en outre l'étape qui consiste à appliquer, de préférence à appliquer en continu, la bande coextrudée continue (110) comportant deux composés sur un tambour de confection du bandage pneumatique ou sur une carcasse du bandage pneumatique.

13. Procédé selon au moins une des revendications 11 à 12, dans lequel on fait varier le rapport entre le premier composé (A) et le second composé (B), de préférence on le fait varier de manière instantanée, en modifiant la valeur de la vitesse de la première pompe à engrenages (42) par rapport à celle de la seconde pompe à engrenages (44).

14. Procédé destiné à la confection d'une bande coextrudée (110) constituée par un premier composé (A) et par un second composé (B), le procédé comprenant les étapes constituées par le fait de :
procurer une buse de coextrusion (100) qui est montée sur une tête rotative (70) ;
extruder un premier composé (A) par l'intermédiaire d'une première extrudeuse (30) et d'une première pompe à engrenages (42) et jusque dans un premier canal (122) de la buse de coextrusion (100) ;
extruder un second composé (B) par l'intermédiaire d'une seconde extrudeuse (60) et d'une seconde pompe à engrenages (44) et jusque dans un second canal (124) de la buse de coextrusion (100) ;
dans lequel le premier et le second canal (122, 124) sont joints l'un à l'autre en amont, de préférence directement en amont d'une sortie de filière (140) de la buse de coextrusion (100) ; et
confectionner une bande coextrudée (110) et appliquer la bande coextrudée (110) sur un tambour de confection de bandage pneumatique ou sur une carcasse de bandage pneumatique tandis que l'on met la buse de coextrusion (100) en rotation.
